# FASCICULE DE BREVET EUROPEEN

(11) **EP 0 541 421 B1**
(45) Date de publication et mention de la délivrance du brevet: **21.06.1995**
(21) Numéro de dépôt: 92402924.2
(22) Date de dépôt: 28.10.1992
(51) Int. Cl.: B60P 1/44

(54) **Ensemble de hayon élévateur**
Aufbau einer Heckklappe als Hebebühne
Assembly of a lifting tail gate

(30) Priorité: 04.11.1991 FR 9113584
(43) Date de publication de la demande: 12.05.1993
(73) Titulaire: HYDRIS SOCIETE ANONYME, F-35220 Chateaubourg (FR)
(72) Inventeur: Tortellier, Christian, 35530 Servon sur Vilaine (FR)
(74) Mandataire: Hoisnard, Jean-Claude

(56) Documents cités:
- AT-B- 380 660
- FR-A- 2 372 048

## Description

L'invention est relative à un ensemble d'un hayon élévateur.

Les hayons élévateurs connus (par exemple de FR-A-2 372 048) sont, en configuration de fonctionnement, montés sur le châssis du véhicule qu'ils équipent au moyen d'un parallélogramme déformable. Les bras et vérirs de commande de la déformabilité du parallélogramme permettent de disposer horizontalement la face supérieure du hayon et d'en régler la hauteur à la demande de l'utilisateur entre l'appui sur le sol et le niveau du plancher de chargement du véhicule. Ces bras et vérins ont, de manière classique, une de leurs extrémités montée pivotante, soit dans des encoches ménagées dans la partie arrière du hayon, soit en-dessous dudit hayon, ceci afin de ne pas encombrer la face supérieure du hayon et en outre de faire en sorte que dans la configuration où cette face supérieure est disposée au même niveau que le plancher de chargement du véhicule, il y ait une sensible continuité entre ladite face supérieure et ledit plancher afin de permettre un passage aisé entre ces deux surfaces.

Cette disposition classique, comprenant des encoches écartées de surcroit des extrémités transversales de la partie arrière du hayon, entraîne la nécessité de devoir renforcer de manière importante cette partie arrière, dont l'épaisseur devient importante. C'est ainsi que, constatant par ailleurs l'inutilité du point de vue de la résistance du hayon, d'adopter une épaisseur aussi grande partout, les constructeurs adoptent une forme extérieure en coin, l'épaisseur des hayons connus croissant de la lisière de chargement vers la partie arrière de montage sur les bras et vérins de manoeuvre. L'une de ces conséquences est que, lorsque la face inférieure du hayon repose sur le sol, la face supérieure n'est plus horizontale, mais légèrement inclinée par rapport au sol. L'utilisation de tels hayons n'est pas exempte de risques d'accident, notamment de basculement de charges, qui sont déséquilibrées par l'inclinaison de la face supérieure inclinée du hayon sur laquelle elles sont placées.

L'invention entend remédier à cet inconvénient en proposant un nouveau hayon ayant une plateforme d'épaisseur sensiblement constante, qui, lorsque la face inférieure repose sur le sol, conserve l'horizontalité de sa face supérieure.

L'invention est donc relative à un ensemble d'un hayon élévateur comprenant une plateforme de manutention munie d'une face support de charges, reliée au châssis d'un véhicule par un bâti de manoeuvre comprenant deux bras supports montés pivotant par rapport audit châssis autour d'un axe géométrique horizontal et une traverse de liaison des deux bras support, la plateforme étant reliée audit bâti de manoeuvre par deux arbres de pivotement espacés, coaxiaux, parallèles audit axe géométrique et disposés à proximité d'une lisière délimitant ladite plateforme.

Selon l'invention, les arbres de pivotement sont situés aux deux extrémités de ladite lisière, cependant que sur l'étendue de la face support de charges de la plateforme, l'épaisseur hors tout de ladite plateforme est sensiblement constante.

Les avantageuses dispositions suivantes sont en outre de préférence adoptées :
- chaque arbre de pivotement est monté sur la plateforme au moyen de deux chapes fixées sur la face support de charges ;
- les deux chapes s'étendent au-delà de la lisière de la plateforme, de sorte qu'un plan perpendiculaire à la face support de charges de la plateforme, passant par l'arbre de pivotement, n'interfère pas avec ladite plateforme, cependant qu'une plaque intermédiaire est fixée sur le bâti de manoeuvre, s'étend parallèlement à l'axe géométrique et est placée de manière telle que, le véhicule ayant un plancher de chargement et la plateforme possédant une position dans laquelle sa face support de charges est placée sensiblement dans le même plan que ledit plancher de chargement, ladite plaque intermédiaire est également placée dans ledit plan contenant le plancher de chargement et réalise la jonction entre ce plancher et la face support de charges de la plateforme ;
- le bâti de manoeuvre comprend une traverse, qui s'étend parallèlement à l'axe géométrique, à proximité de ladite lisière, et dont les extrémités supportent des goussets de montage desdits arbres de pivotement, le bâti de manoeuvre comprenant également deux bras parallèles, qui s'étendent perpendiculairement à la traverse en y étant fixés en deux emplacements non adjacents aux extrémités de cette traverse.

L'avantage principal de l'invention est, grâce à un choix judicieux des moyens de montage de la plateforme du hayon sur les bras et vérins de manoeuvre, l'obtention simplement de l'horizontalité de la face supérieure de la plateforme.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés dans lesquels :
- la figure 1 est une vue de profil d'un ensemble de hayon élévateur conforme à l'invention, représentant trois configurations distinctes de ce hayon ;
- la figure 2 est une vue de dessus de l'ensemble de hayon élévateur de la figure 1 ;
- les figures 3 et 4 représentent, en coupe, un agrandissement d'un détail de l'ensemble des figures 1 et 2 dans deux configurations distinctes de fonctionnement.

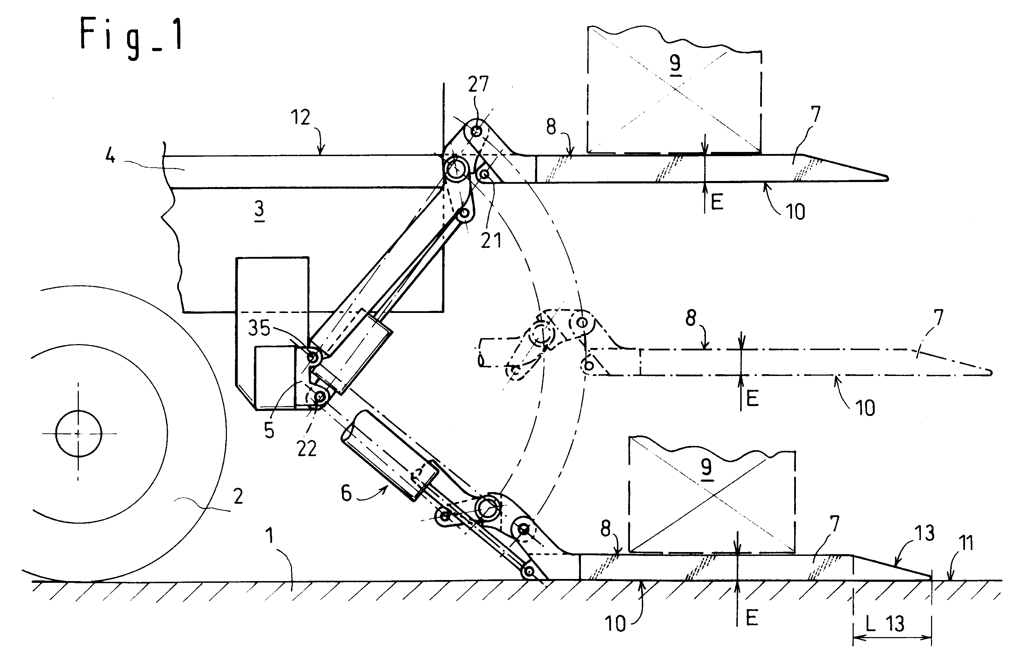

La figure 1 représente la partie arrière d'un camion, qui repose sur le sol 1 par l'intermédiaire de ses roues 2 et qui possède un châssis 3 sur lequel sont fixés, d'une part un plancher de chargement 4, d'autre part une traverse arrière 5 appartenant à un bâti de manoeuvre 6.

Le bâti de manoeuvre 6 est constitué par un ensemble de bras et de vérins qui permettent, notamment, dans les configurations d'utilisation de la plateforme 7 du hayon élévateur représenté, de relier cette plateforme 7 au châssis 3 par l'intermédiaire d'un parallèlogramme déformable assurant le déplacement de la plateforme 7 parallèlement à elle-même, et, en particulier, assurant le maintien de l'horizontalité de sa face supérieure 8, qui supporte une charge 9.

Il peut être observé que l'épaisseur hors tout E de la plateforme 7 est sensiblement constante, de sorte que sa face inférieure 10 est sensiblement parallèle à sa face supérieure 8, tout au moins à l'aplomb de la partie de la face supérieure 8 sur laquelle une charge 9 peut être placée. Ainsi, lorsque la plateforme 7 repose sur le sol par appui de sa face inférieure 10 sur la surface 11 du sol 1, lorsque cette surface 11 est sensiblement horizontale, la face supérieure 8, qui lui est parallèle, est elle aussi sensiblement horizontale, de sorte que la charge 9 qui y est déposée conserve une stabilité satisfaisante, exempte de risques de basculement.

De plus, en position haute, la face supérieure 8 de la plateforme 7 est au même niveau par rapport à la surface 11 du sol (ou est contenu dans le même plan) que la face supérieure 12 du plancher de chargement 4 du camion, permettant le passage de la charge 9 de la face supérieure 8 de la plateforme 7 sur la face supérieure 12 du plancher 4.

Bien entendu, la plateforme 7 est en outre munie, à son extrémité avant (celle par laquelle l'utilisateur met en place la charge 9 sur la face supérieure 8), d'un coin de faible largeur L13, dont la face supérieure 13, légèrement inclinée par rapport à la face supérieure 8, relie ladite face supérieure 8 de la plateforme 7 à la surface 11 du sol, lorsque ladite plateforme 7 repose sur le sol 1.

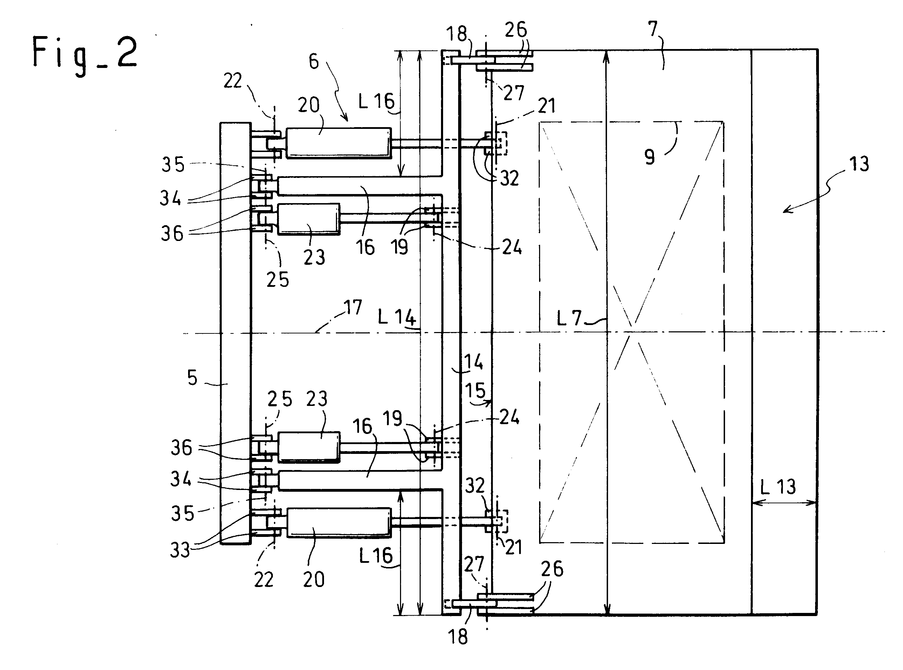

En regard de la figure 2, la constitution du bâti de manoeuvre 6 est représentée.

Ce bâti de manoeuvre comprend :
- une traverse 14, qui s'étend à proximité de la lisière 15 délimitant la partie arrière de la plateforme 7, et dont la longueur L14 est sensiblement égale à la largeur L7 de la plateforme 7 ;
- deux bras 16 solidaires de la traverse 14, en y étant de préférence soudés, qui sont parallèles l'un à l'autre et contenus dans des plans verticaux parallèles à l'axe longitudinal médian 17 de la plateforme 7, et qui sont placés à une distance L16 des extrémités de la traverse 14 (L16 égale à environ L14:4) ;
- deux goussets 18, soudés sur la traverse 14, adjacents à des extrémités ;
- deux ensembles de chapes 19 placés chacun à proximité d'un bras 16, et tous deux entre les deux bras 16 ;
- deux vérins 20, dits de réglage d'inclinaison de la face supérieure 8 de la plateforme 7, attelés, entre cette plateforme 7 et la traverse 5 par des arbres de pivotement 21, 22, respectivement, chaque vérin 20 étant placé à côté d'un bras 16, à l'extérieur de l'espace compris entre les deux bras 16 ;
- deux vérins 23, dits de levage, destinés à régler le niveau de la face supérieure 8 de la plateforme 7 par rapport au sol 1, attelés entre la traverse 14 et la traverse 5 par des arbres de pivotements 24, 25, respectivement, chaque vérin 23 étant placé à côte d'un bras 16, entre les deux bras 16.

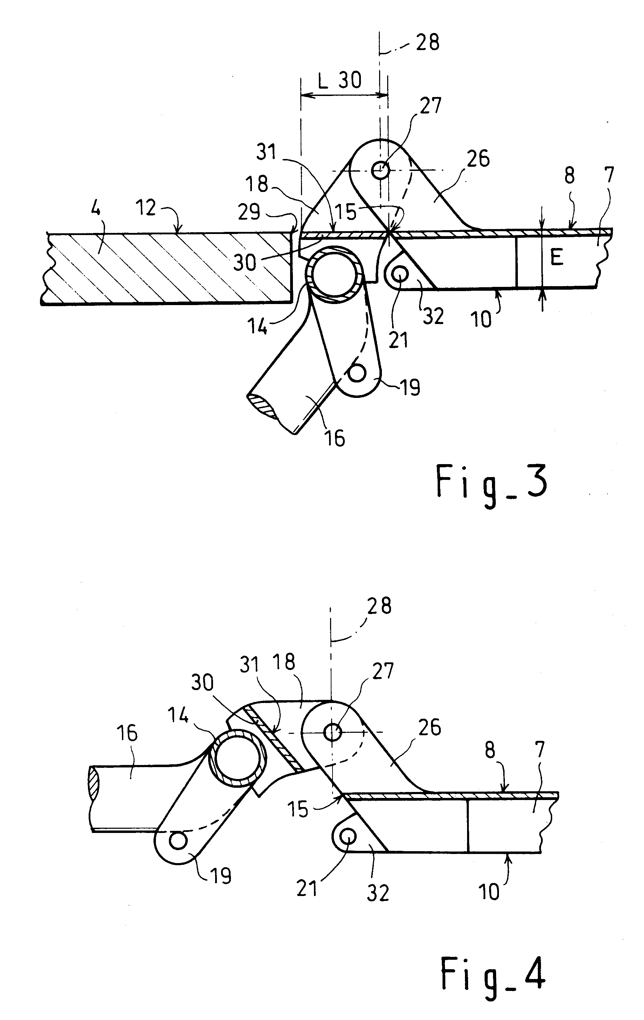

Les dispositions suivantes doivent être notées :
- deux ensembles de chapes 26 sont soudés sur la face supérieure 8 de la plateforme 7, aux extrémités de la lisière 15, et sont aptes à recevoir chacun l'un des goussets 18 soudés sur la traverse 14, permettant au moyen des deux arbres de pivotement 27, coaxiaux, de réaliser le montage à pivotement de la plateforme 7 par rapport à la traverse 14 ;
- les chapes 26 sont proéminentes par rapport à la face supérieure 8 de la plateforme et les arbres de pivotement 27 sont déportés au-delà de la lisière 15 de la plateforme (un plan vertical 28 contenant les arbres de pivotement 27 passe à côté de la plateforme 7 dans toutes les positions où la face supérieure 8 de celle-ci est horizontale, sans interférer avec la plateforme 7);
- la traverse 14 est de ce fait disposée, dans la configuration dans laquelle les faces supérieures 8 de la plateforme 7 et 12 du plancher de chargement 4 sont contenues dans un même plan (figure 3), entre ladite lisière 15 et ledit plancher 4, un espace séparant la lisière 15 du bord 29 du plancher 4 et étant susceptible de gêner le transbordement de la charge 9 de la face supérieure 8 de la plateforme vers la face supérieure 12 du plancher.

Selon l'invention, une plaque intermédiaire 30, soudée sur la traverse 14 a une longueur L30 sensiblement égale, à un jeu de fonctionnement près, à l'écartement séparant les lisières 15 et 29, ladite plaque 30, dans la configuration de la figure 3, ayant en outre sa face supérieure 31 contenue dans le même plan que lesdites faces supérieures 8 et 12, de sorte que la jonction sans discontinuité est réalisée de la face supérieure 8 de la plateforme 7 avec la face supérieure 12 du plancher de chargement 4 ;
- dans les autres configurations d'utilisation (figure 4), la face supérieure 31 de la plaque intermédiaire 30 n'est pas horizontale et est placée en saillie par rapport à la face supérieure 8, réalisant une butée de limitation du déplacement de la charge 9 sur la face supérieure 8 de la plateforme 7.

Des oreilles 32, soudées à la partie arrière de la plateforme 7, ne dépassent pas la face inférieure 10 de cette plateforme, permettent le montage à pivotement au moyen des arbres de pivotement 21 d'une extrémité de chacun des vérins 20. De même, des oreilles 33, soudées sur la traverse 5, permettent le montage à pivotement au moyen des arbres de pivotement 22 de l'autre extrémité de chaque vérin 20.

Des oreilles 34, soudées sur la traverse 5, réalisent le montage à pivotement, autour d'arbres de pivotement coaxiaux 35, des bras 16 par rapport à la traverse 5.

Des oreilles 36, soudées sur la traverse 5 réalisent le montage à pivotement, autour des arbres de pivotement 25, d'une extrémité de chacun des vérins 23 par rapport à la traverse 5. De même, les chapes 19 réalisent le montage à pivotement, autour des arbres de pivotement 24, de l'autre extrémité de chaque vérin 23 par rapport à la traverse 14.

Il doit être observé que les emplacements des arbres de pivotement 21, 27 sur la plateforme 7, d'une part, des arbres de pivotement 22, 35 sur la traverse 5 d'autre part, sont tels que, dans la vue de profil il est possible de régler les longueurs des vérins 20 de manière que les arbres de pivotements 21, 27, 35 et 22 sont placés aux sommets d'un parallèlogramme déformable. La commande de l'extension ou de la rétraction des vérins 23, provoque la déformation de ce parallélogramme tout en conservant l'orientation de la face supérieure 8 de la plateforme 7. L'horizontalité de ladite face supérieure 8 coïncidant avec l'existence dudit parallélogramme est ainsi conservée dans toutes les configurations d'utilisation du hayon élévateur.

Le montage des goussets 18 dans les chapes 26 évite la réalisation d'encoches dans la plateforme 7 et l'affaiblissement qui en résulterait. De plus, le choix de la position des chapes 26 aux extrémités de la lisière 15 assure un montage pivotant de la plateforme aux extrémités de la traverse 14, sans porte-à-faux générateur de flexions indésirables, non contrôlées.

De cette manière, l'épaisseur de la plateforme dans les zones de fixation des arbres 27, là où sont soudées les chapes 26, et plus généralement le long de la lisière 15, peut être égale à l'épaisseur E dans la zone de support de charges 9, sans qu'aucun renforcement ne soit nécessaire à un quelconque emplacement. L'épaisseur E peut être choisie constante, ce qui permet l'obtention automatique de l'horizontalité de la face supérieure 8 lorsque la face inférieure 10 de la plateforme 7 repose sur le sol.

La plaque intermédiaire 30 par ailleurs, d'une part assure la jonction des faces supérieures 8 de la plateforme 7 et 12 du plancher de chargement 4, dans la configuration de transbordement d'une charge (figure 3), d'autre part forme une butée interdisant tout déplacement intempestif de la charge 9 sur la face supérieure 8 de la plateforme 7 dans les autres configurations d'utilisation (figure 4).

Enfin, le choix des emplacements des chapes 26 aux extrémités de la lisière 15 permet de dégager entièrement la quasi totalité de la largeur L7 de la plateforme et facilite ainsi le transbordement d'une charge 9 de la face supérieure 8 de la plateforme vers la face supérieure 12 du plancher de chargement.

L'invention n'est pas limitée à la réalisation décrite mais en couvre au contraire toutes les variantes qui pourraient lui être apportées sans sortir de son cadre, comme défini dans les revendications qui suivent.

## Revendications

1. Ensemble d'un hayon élévateur comprenant une plateforme de manutention (7) munie d'une face (8) support de charges, reliée au châssis (3) d'un véhicule par un bâti de manoeuvre (6) comprenant deux bras supports (16) montés pivotant par rapport audit châssis autour d'un axe géométrique horizontal(35) et une traverse (14) de liaison des deux bras supports (16), la plateforme (7) étant reliée audit bâti de manoeuvre (6) par deux arbres de pivotement (27) espacés, coaxiaux, parallèles audit axe géométrique et disposés à proximité d'une lisière (15) délimitant ladite plateforme (7),
caractérisé en ce que les arbres de pivotement(27) sont situés aux deux extrémités de ladite lisière (15), cependant que sur l'étendue de la face (8) support de charges de la plateforme, l'épaisseur hors tout (E) de ladite plateforme (7) est sensiblement constante.

2. Ensemble selon la revendication 1, caractérisé en ce que chaque arbre de pivotement (27) est monté sur la plateforme au moyen de deux chapes (26) fixées sur la face (8) support de charges.

3. Ensemble selon la revendication 2, caractérisé en ce que les deux chapes (26) s'étendent au-delà de la lisière (15) de la plateforme, de sorte qu'un plan (28) perpendiculaire à la face (8) support de charges de la plateforme (7), passant par l'arbre de pivotement, n'interfère pas avec ladite plateforme (7), cependant qu'une plaque intermédiaire (30) est fixée sur le bâti de manoeuvre (6-14), s'étend parallèlement à l'axe géométrique et est placée de manière telle que, le véhicule ayant un plancher de chargement (12) et la plateforme (7) possédant une position (figure 3) dans laquelle sa face (8) support de charges est placée sensiblement dans le même plan que ledit plancher de chargement (12), ladite plaque intermédiaire (30) est également placée dans ledit plan contenant le plancher de chargement et réalise la jonction entre ce plancher (12) et la face (8) support de charges de la plateforme (7).

4. Ensemble selon l'une quelconque des revendications 1 à 3, caractérisé en ce que le bâti de manoeuvre (6) comprend une traverse (14), qui s'étend parallèlement à l'axe géométrique, à proximité de ladite lisière (15), et dont les extrémités supportent des goussets (18) de montage desdits arbres de pivotement (27), le bâti de manoeuvre (6) comprenant également deux bras parallèles (16), qui s'étendent perpendiculairement à la traverse (14) en y étant fixés en deux emplacements non adjacents (L16) aux extrémités de cette traverse.

## Claims

1. A lifting tail gate assembly, comprising a handling platform (7) provided with a load-supporting side (8) connected to the chassis (3) of a vehicle by an operating frame (6) comprising two supporting arms (16) mounted for pivoting relative to the said chassis round a horizontal geometrical axis (35), and a cross member (14) for connecting the two supporting arms (16), the platform (7) being connected to the said operating frame (6) by two interspaced coaxial pivot pins (27) that are parallel to the said geometrical axis and disposed in the vicinity of an edge (15) delimiting the said platform (7),
characterized in that the pivot pins (27) are situated at the two ends of the said edge (15), while over the length of the load-supporting side (8) of the platform the overall thickness (E) of the said platform (7) is substantially constant.

2. An assembly according to claim 1, characterized in that each pivot pin (27) is mounted on the platform by means of two fork joints (26) fixed on the load-supporting side (8).

3. An assembly according to claim 2, characterized in that the two fork joints (26) extend beyond the edge (15) of the platform, so that a plane (28) perpendicular to the load-supporting side (8) of the platform (7) passing through the pivot pin does not interfere with the said platform (7), while an intermediate plate (30) is fixed to the operating frame (6-14), extends parallel to the geometrical axis, and is positioned in such a way that, the vehicle having a loading floor (12) and the platform (7) having a position (Figure 3) wherein its load-supporting side (8) is placed substantially in the same plane as the said loading floor (12), the said intermediate plate (30) is also placed in the said plane containing the loading floor and provides the junction between this floor (12) and the load-supporting side (8) of the platform (7).

4. An assembly according to any one of claims 1 to 3, characterized in that the operating frame (6) comprises a cross member (14) which extends parallel to the geometrical axis in the vicinity of the said edge (15), and whose ends support brackets (18) for mounting the said pivot pins (27), the operating frame (6) also comprising two parallel arms (16) which extend perpendicularly to the cross member (14) while being fixed thereto in two non-adjacent locations (L16) at the ends of this cross member.

## Patentansprüche

1. Aufbau einer Heckklappe als Hebebühne, die eine Förderbühne (7) aufweist, die mit einer Lastträgerseite (8) ausgestattet ist, mit dem Rahmen (3) eines Fahrzeugs durch ein Betätigungsgestell (6) verbunden ist, das zwei Trägerarme (16), die bezüglich des Rahmens um eine horizontale, geometrische Achse (35) schwenkbar angebracht sind und ein Querteil (14) zur Verbindung der beiden Trägerarme (16) aufweist, wobei die Bühne (7) mit dem Betätigungsgestell (6) durch zwei Schwenkachsen (27), die im Abstand voneinander, koaxial, parallel zu der geometrischen Achse und in der Nähe einer die Bühne (7) begrenzenden Kante (15) angeordnet sind, verbunden ist,
dadurch gekennzeichnet, daß
die Schwenkachsen (27) an den beiden Enden der Kante (15) liegen, während über die räumliche Ausdehnung der Lastträgerseite (8) der Bühne die Dicke (E) über alles der Bühne (7) etwa konstant ist.

2. Aufbau nach Anspruch 1, dadurch gekennzeichnet, daß jede Schwenkachse (27) auf der Bühne mittels zwei Trägern (26), die auf der Lastträgerseite (8) befestigt sind, angebracht ist.

3. Aufbau nach Anspruch 2, dadurch gekennzeichnet, daß die beiden Träger (26) sich über die Kante (15) der Bühne erstrecken, derart, daß eine zur Lastträgerseite (8) der Bühne (7) senkrechte Ebene (28), die durch die Schwenkachse verläuft, nicht mit der Bühne (7) interferiert, während eine Zwischenplatte (30) auf dem Betätigungsgestell (6-14) befestigt ist, sich parallel zur geometrischen Achse erstreckt und so angeordnet ist, wobei das Fahrzeug eine Ladefläche(12) aufweist und die Bühne (7) eine Stellung (Figur 3) einnimmt, in der die Lastträgerseite (8) etwa in derselben Ebene liegt wie die Ladefläche (12), daß die Zwischenplatte (30) auch in der die Ladefläche enthaltenden Ebene liegt und die Verbindung zwischen der Fläche (12) und der Lastträgerseite (8) der Bühne (7) herstellt.

4. Aufbau nach einem der Ansprüche 1 bis 3, dadurch gekennzeichnet, daß das Betätigungsgestell (6) ein Querteil (14) aufweist, das sich parallel zur geometrischen Achse in Nähe der Kante (15) erstreckt und dessen Enden Tragbänder (18) zur Montage der Schwenkachsen (27) tragen, wobei das Betätigungsgestell (6) auch zwei parallele Arme (16) aufweist, die sich senkrecht zum Querteil (14) erstrecken und dort an zwei nicht benachbarten Stellen (L16) an den Enden dieses Querteils befestigt sind.
